Europäisches Patentamt

European Patent Office

Office européen des brevets

(19)

(11) Veröffentlichungsnummer : **0 428 027 B1**

# (12) EUROPÄISCHE PATENTSCHRIFT

(45) Veröffentlichungstag der Patentschrift :
**09.08.95 Patentblatt 95/32**

(51) Int. Cl.$^6$ : **G01S 17/36, G01S 17/87**

(21) Anmeldenummer : **90121050.0**

(22) Anmeldetag : **02.11.90**

(54) Optische Entfernungsmessvorrichtung.

(30) Priorität : **09.11.89 DE 3937268**

(43) Veröffentlichungstag der Anmeldung :
**22.05.91 Patentblatt 91/21**

(45) Bekanntmachung des Hinweises auf die
Patenterteilung :
**09.08.95 Patentblatt 95/32**

(84) Benannte Vertragsstaaten :
**CH DE FR GB LI NL SE**

(56) Entgegenhaltungen :
**DE-A- 2 709 577**
**US-A- 4 744 653**

(56) Entgegenhaltungen :
**MEASUREMENT TECHNIQUES. Bd. 31, Nr. 5,
Mai 1988, NEW YORK US Seiten 421 - 423;I.V.
LUKIN ET AL.: 'High-precision differentiallaser range finder'**
**OPTICAL ENGINEERING. Bd. 25, Nr. 3, März
1986, BELLINGHAM US Seiten 490 - 494;C.C.
ALEKSOFF ET AL.: 'Laser heterodyne ranging
using a mode-locked oscillator for bandwidth
compression'**

(73) Patentinhaber : **Firma Carl Zeiss**
**D-73446 Oberkochen (DE)**
(84) **CH DE FR LI NL SE**
Patentinhaber : **CARL ZEISS-STIFTUNG
HANDELND ALS CARL ZEISS**
**D-89518 Heidenheim (Brenz) (DE)**
(84) **GB**

(72) Erfinder : **Küchel, Michael, Dr.**
**Keplerstrasse 3**
**W-7082 Oberkochen (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine optische Entfernungsmessvorrichtung nach dem Oberbegriff des Anspruches 1. Eine derartige Meßvorrichtung ist in Measurement Techniques, Band 31, Nr. 5., 1988, Seiten 421-423 beschrieben. Die Detektorsignale des am Meßobjekt reflektierten Lichts und eines internen Referenzstrahlenganges werden hier jeweils mit einer Referenzschwingung, die von einem Quarzoszillator elektronisch erzeugt ist, auf eine niedrige Frequenz heruntergemischt. Die Phasenmessung erfolgt dann anhand des Signals bei dieser heruntergemischten Frequenz. Die Vorrichtung weist bei einer Meßdistanz von bis zu 30 m eine relative Genauigkeit von $2\times10^{-6}$ auf.

Die elektronischen Tachymeter der Anmelderin, beispielsweise in "Zeiss-Informationen", 20. Jahrgang, Heft 80, Seite 24 (1972) beschrieben, stellen Meßvorrichtungen dar, die einen relativ einfachen optischen Aufbau haben. Eine über einen Oszillator und einen Verstärker betriebene Lumineszenzdiode erzeugt einen amplitudenmodulierten Lichtstrahl. Dieser wird zum Meßobjekt ausgesandt, von diesem reflektiert und vom Gerät wieder empfangen und detektiert. Das Detektorsignal und ein Referenzsignal vom Verstärker werden mit dem Signal eines zweiten Oszillators elektronisch gemischt. Anschließend wird die Phasendifferenz zwischen dem Detektorsignal und dem Referenzsignal ermittelt.

Die Meßgenauigkeit der Tachymeter beträgt etwa 1 mm bei einer Meßdistanz von einigen 100 m. Dies entspricht einer relativen Meßgenauigkeit von $5 \times 10^{-6}$. Als Meßobjekte sind ausschließlich reflektierende Körper geeignet.

In der WO 88/08519 ist eine Meßvorrichtung mit einem heterodyn-interferometrischen Aufbau beschrieben, die noch über eine größere Meßgenauigkeit verfügt, wenn die Meßdistanz kleiner ist.

Diese Vorrichtung verwendet zwei frequenzstabilisierte Laserstrahlen mit unterschiedlichen Frequenzen. Aus diesen zwei Laserstrahlen erzeugen zwei akustooptische Modulatoren durch Summenfrequenzbildung vier Laserstrahlen, die jeweils verschiedene Frequenzen haben. Die dazu benötigten Modulationsfrequenzen werden von zwei elektronischen Oszillatoren erzeugt und den akustooptischen Modulatoren aufgeprägt.

Die Meßgenauigkeit dieser Vorrichtung ist vom Meßobjekt abhängig. Sie ist bei streuenden Meßobjekten geringer als bei reflektierenden Meßobjekten. Dies wird auch in dem Aufsatz von R. Dändliker et al., Optics Letters, Vol. 13, No. 5, 339 (1988) bestätigt.

Ganz allgemein hängt die relative Meßgenauigkeit solcher Meßvorrichtungen davon ab, wie genau der relative Phasenunterschied zweier Meßsignale ermittelt werden kann und wie stabil die Phase des amplitudenmodulierten Lichts ist. Soll eine Entfernung s mit einer Genauigkeit $\Delta s$ ermittelt werden, so darf die spektrale Unschärfe $\Delta f/f$ der Modulationsfrequenz f nicht größer sein als die gewünschte laterale Unschärfe $\Delta s/s$:

$$\Delta f/f \leqq \Delta s/s$$

Bei einer Entfernung s = 300 m und einer Meßgenauigkeit von 0,1 mm ist somit nur eine spektrale Unschärfe $\Delta f/f \leqq 3,3 * 10^{-7}$ zulässig. Entsprechend scharf definierte Modulationsfrequenzen lassen sich mit elektronischen Oszillatoren nur unter sehr großem Aufwand erzeugen. Daher ist auch bei der eingangs genannten Meßvorrichtung eine weitere Steigerung der Auflösung nur mit großem elektronischem Aufwand möglich.

Es ist die Aufgabe der vorliegenden Erfindung, eine Meßvorrichtung der eingangs genannten Art zu schaffen, deren Meßgenauigkeit für reflektierende und für streuende Meßobjekte identisch ist. Darüberhinaus soll die Meßvorrichtung Messungen mit einem relativen Fehler, der kleiner als $10^{-6}$ ist, bei Meßzeiten unter 100 ms ermöglichen.

Diese Aufgabe wird erfindungsgemäß durch eine Meßvorrichtung mit den Merkmalen des Anspruches 1 gelöst.

Bei der erfindungsgemäßen Meßvorrichtung besteht wie bei der Meßvorrichtung aus der eingangs genannten Druckschrift die Lichtquelle aus zwei jeweils frequenzstabilisierten, mehrmodigen Lasern mit Frequenzabständen $\Delta f_1$ und $\Delta f_2$ zwischen den Modi, wobei daß die Frequenzen so gewählt sind, daß sich das Verhältnis $\Delta f_1/\Delta f_2$ der beiden Frequenzabstände um einen gegen die Zahl 1 kleinen Betrag von einer ganzen Zahl unterscheidet. Jeder der beiden frequenzstabilisierten Laser strahlt mehrere Modi hoher spektraler Schärfe ab. Der Frequenzabstand zwischen den Modi eines Lasers weist dieselbe spektrale Schärfe auf wie jeder einzelne Modus selbst. Durch geeignete Überlagerung mehrerer Modi eines Lasers läßt sich ein amplitudenmodulierter Laserstrahl erzeugen, dessen Modulationsfrequenz dem Frequenzabstand zwischen den überlagerten Modi entspricht.

Handelt es sich bei den Modi um verschiedene longitudinale Modi eines Resonators, so beträgt der Frequenzabstand je nach Resonatorlänge etwa 100 MHz bis 10 GHz. Zwei benachbarte longitudinale Modi eines Helium-Neon-Lasers mit einer Resonatorlänge von 25 cm haben beispielsweise einen Frequenzabstand von 600 MHz.

Heute ist es möglich, die Phasen elektronischer Schwingungen mit Frequenzen bis zu etwa 1 MHz mit hoher Genauigkeit zu bestimmen. Deshalb sind die Frequenzabstände der beiden Laser so aufeinander ab-

2

gestimmt, daß sich nach der Detektion der beiden amplitudenmodulierten Lichtstrahlen durch elektronisches Mischen der jeweiligen Detektorsignale eine elektronische Schwingung erzeugen läßt, deren Frequenz nur einen Bruchteil der beiden Modulationsfrequenzen beträgt. Die Phase dieser Schwingung wird dann mit hoher Genauigkeit ermittelt. Gegebenenfalls ist vorzusehen, daß auch ein Detektorsignal zwecks Frequenzvervielfachung mit sich selbst gemischt wird.

Bei der erfindungsgemäßen Vorrichtung jedoch auf den Einsatz frequenzstabilisierter elektronischer Oszillatoren verzichtet wird, wodurch der notwendige Aufwand gering ist. Stattdessen wird das Detektorsignal des Detektors, der das am Meßobjekt gestreute oder reflektierte Licht empfängt, mit dem Ausgangssignal des Detektors elektronisch gemischt, der das amplitudenmodulierte Licht des anderen Lasers empfängt.

Es sind unterschiedliche und zum Teil sehr einfache Methoden bekannt, Laser auf spektrale Unschärfen $\Delta f/f \leqq 10^{-7}$ zu stabilisieren. Einige dieser Methoden sind in der "Dokumentation Laserinterferometrie in der Längenmeßtechnik", VDI-Verlag Düsseldorf 1985, Seite 8 ff beschrieben.

Ein besonders einfaches Stabilisierungsverfahren wird in der DE-C-20 43 734 vorgeschlagen. Die beiden Modi eines zweimodigen Gaslasers werden polarisationsoptisch getrennt und deren Intensitäten gemessen. Ein Regelkreis steuert den Entladungsstrom so, daß das Intensitätsverhältnis beider Modi konstant ist.

Bei stabilisierten Mehrmodenlasern überträgt sich die spektrale Schärfe der einzelnen Modi auch auf den Frequenzabstand zwischen den Modi. Es ist durchaus bekannt, die hohe spektrale Schärfe dieses Frequenzabstandes für interferometrische Längenmessungen zu nutzen. Solche interferometrischen Vorrichtungen erlauben schon heute Messungen mit einer relativen Genauigkeit, die besser als $10^{-6}$ ist. Jedoch erfordern sie stets hochreflektierende Meßobjekte, in der Regel Tripelreflektoren. Bei der Verwendung streuender Meßobjekte ist dagegen die Intensität des zurückgestreuten Lichts zu gering. Darüberhinaus führt die Streuung zu einer Dekorrelation der Phasenbeziehung des Meßlichts.

Ein vorteilhaftes Ausführungsbeispiel der Erfindung sieht vor, daß die beiden Laser jeweils zweimodig sind. Dann kann das sehr einfache Stabilisierungsverfahren nach der DE-C-20 43 734 für die beiden Laser eingesetzt werden. Außerdem ist auch der als Meßlicht ausgenutzte Anteil des Laserlichts am größten, wenn die Laser jeweils zweimodig sind.

Beim Einsatz zweier zweimodiger Laser sollte sich das Verhältnis $\Delta f_1/ \Delta f_2$ der beiden Frequenzabstände der beiden Laser um weniger als 1% von der Zahl 1 unterscheiden. Die Phasenmessung kann dann direkt bei der Differenzfrequenz $\Delta f_{12} = \Delta f_1 - \Delta f_2$ der beiden Frequenzabstände erfolgen. Die erfindungsgemäße Entfernungsmeßvorrichtung sieht vor, daß die Modi jedes Lasers interferenzfähig überlagert sind, so daß zwei amplitudenmodulierte Laserstrahlen mit den Modulationsfrequenzen $\Delta f_1$ und $\Delta f_2$ entstehen. Die Meßvorrichtung enthält insgesamt drei Detektoren, und zwar jeweils einen Detektor für den Empfang jeweils eines Teilstrahles der überlagerten Modi jedes Lasers. Der dritte Detektor empfängt das von einem Laser zum Meßobjekt ausgesandte und an diesem gestreute oder reflektierte Licht.

Bei einem Ausführungsbeispiel sind zwei Meßschritte erforderlich. In jedem Meßschritt erfolgt eine Bestimmung der Phasendifferenz zwischen dem dritten und demjenigen Detektor, der Licht desselben Lasers und daher mit derselben Modulationsfrequenz wie der dritte Detektor empfängt. Dazu werden beide Detektorsignale phasengleich mit dem Signal des verbleibenden Detektors gemischt, so daß die Phasenmessung selbst bei der Differenzfrequenz $\Delta f_{12} = \Delta f_1 - \Delta f_2$ erfolgt. Die beiden Meßschritte unterscheiden sich dadurch, daß in verschiedenen Meßschritten das Licht verschiedener Laser und damit unterschiedlicher Modulationsfrequenz zum Meßobjekt ausgesandt wird. Dazu ist eine Einrichtung zum Vertauschen beider Laserstrahlen vorgesehen.

Aus den beiden gemessenen Phasendifferenzen kann die Entfernung eindeutig ermittelt werden. Der Eindeutigkeitsbereich L ist durch die Frequenzabstände $\Delta f_1$ und $\Delta f_2$ gegeben:

$$L = (\Delta f_1 - \Delta f_2)\, c/2$$

Diese einfache Meßvorrichtung hat gegenüber interferometrischen Meßvorrichtungen den Vorteil, daß es über einen großen Eindeutigkeitsbereich L der Meßergebnisse verfügt. Eine der WO-A-88/08519 entsprechende interferometrische Meßvorrichtung hat nur dann einen ähnlich großen Eindeutigkeitsbereich, wenn mindestens eine der optischen Laserfrequenzen abstimmbar ist.

Es sind unterschiedliche Einrichtungen zum Vertauschen der Laserstrahlen bekannt. Eine einfache Einrichtung dieser Art hoher Stabilität sieht eine mechanische Zerhackeinrichtung vor, die an zwei verschiedenen Stellen abwechselnd Licht transmittieren läßt.

Damit zuverlässigere Meßergebnisse erzielbar sind, können Phasendriften zwischen den Detektoren kompensiert werden. Die Ursache solcher Phasendriften können z.B. Änderungen der Signalverarbeitungszeiten der Detektoren aufgrund von Temperaturänderungen sein. Zur Kompensation solcher Phasendriften genügt es, daß der dritte Detektor wechselweise das am Meßobjekt gestreute bzw. reflektierte Licht oder einen Teil des auszusendenden Lichts empfängt. Auch hier kann eine mechanische Zerhackeinrichtung eingesetzt sein, die abwechselnd einen von zwei Strahlengängen unterbricht.

Vorteilhaft ist es auch, wenn die Zählfrequenz des digitalen Phasenmessers durch den Frequenzabstand der beiden Modi eines der beiden Laser gegeben ist. Die hohe Zählrate führt dann zu einer hohen digitalen Auflösung. Außerdem erfolgt die Zählung mit der großen spektralen Schärfe des Frequenzabstandes der beiden Modi eines Lasers.

Im folgenden werden einzelne Ausführungsbeispiele der Erfindung anhand der Zeichnungen näher erläutert. Im einzelnen zeigen:

Figur 1: Eine schematische Darstellung einer erfindungsgemäßen Meßvorrichtung mit zwei ähnlichen, zweimodigen Lasern;

Figur 2a: ein Diagramm der Verstärkung des ersten Lasers aus Figur 1 als Funktion der Frequenz;

Figur 2b: ein Diagramm der Verstärkung des zweiten Lasers aus Figur 1 als Funktion der Frequenz;

Figur 3a: ein Diagramm der Verstärkung eines ersten Lasers für ein zweites Ausführungsbeispiel mit zwei unterschiedlichen Lasern als Funktion der Frequenz;

Figur 3b: ein Diagramm der Verstärkung eines zweiten Lasers für das Ausführungsbeispiel nach Figur 3a als Funktion der Frequenz.

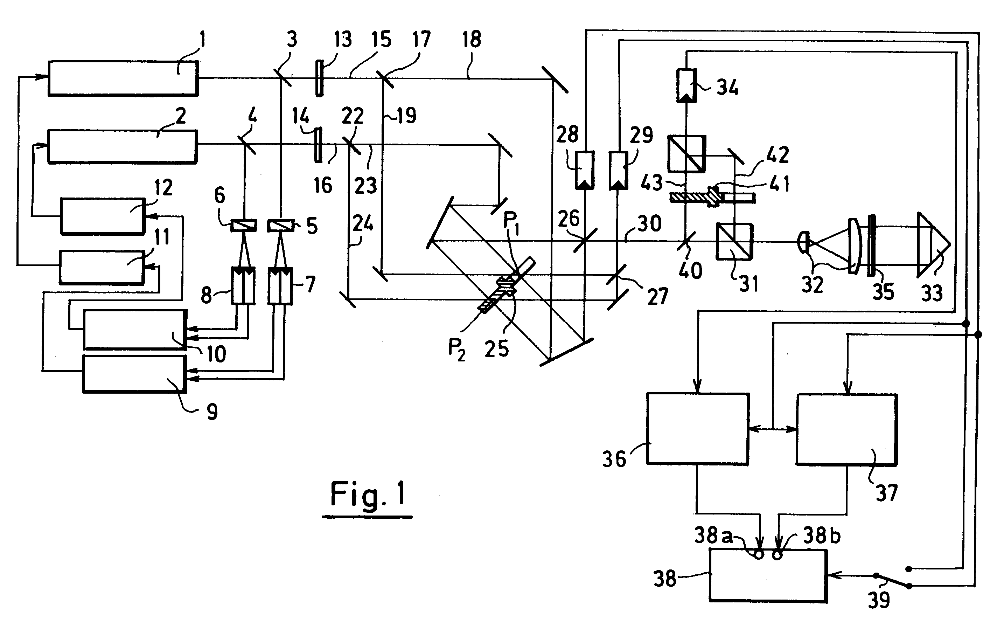

In Figur 1 sind mit (1) und (2) zwei zweimodige Laser bezeichnet, die weiter unten noch detaillierter beschrieben werden. Zur Stabilisierung beider Laser lenken die Strahlteiler (3, 4) einen Teilstrahl jedes Lasers auf ein Wollastonprisma (5, 6). Die Wollastonprismen trennen die beiden Modi jedes Laserstrahles entsprechend ihrer Polarisation auf. Die aufgespalteten Modi werden von Zwillingsphotodioden (7, 8) getrennt detektiert und zwei Regler (9, 10) gewinnen aus den Detektorsignalen zwei Regelsignale. Die Regler (9, 10) steuern über die Lasernetzteile (11, 12) den Entladungsstrom des jeweiligen Lasers so, daß beide Modi eines Lasers die gleiche Intensität besitzen. Dadurch werden beide Laser auf eine spektrale Unschärfe $\Delta f/f = 3 \times 10^{-8}$ stabilisiert. Dieses Stabilisierungsverfahren ist in der DE-C-20 43 734 detailliert beschrieben.

Durch den ersten Polarisator (13), der unter 45° zu den Polarisationsrichtungen der beiden Modi des ersten Lasers (1) steht, werden dessen beiden Modi interferenzfähig überlagert. Es entsteht eine amplitudenmodulierte Lichtwelle (15), deren Modulationsfrequenz $\Delta f_1$ durch den Frequenzabstand beider Modi gegeben ist.

Durch den zweiten Polarisator (14) werden in gleicher Weise die beiden Modi des zweiten Lasers (2) interferenzfähig überlagert. Es entsteht eine zweite amplitudenmodulierte Lichtwelle (16), deren Modulationsfrequenz $\Delta f_2$ beträgt.

Zwei Strahlteiler (17, 22) teilen die erste amplitudenmodulierte Welle (15) in zwei intensitätsgleiche Teilstrahlen (18, 19) und die zweite amplitudenmodulierte Welle (16) in zwei intensitätsgleiche Teilstrahlen (23, 24) auf. Ein Teilstrahl (19) des ersten Lasers und ein Teilstrahl (23) des zweiten Lasers schneiden sich in einem Punkt $P_1$, die beiden verbleibenden Teilstrahlen (18, 24) schneiden sich in einem zweiten Punkt $P_2$. Eine mechanische Zerhackeinrichtung (25) läßt abwechselnd Licht entweder durch den Punkt $P_1$ oder durch den Punkt $P_2$ transmittieren.

Ein dritter Strahlteiler (27), der hinter der Zerhackeinrichtung (25) im Strahlengang angeordnet ist, überlagert den durch den Punkt $P_1$ gelenkten Teilstrahl (19) des ersten Lasers (1) und den durch der Punkt $P_2$ gelenkten Teilstrahl (24) des zweiten Lasers (2) und lenkt sie zum ersten Detektor (29), der als Photodiode ausgebildet ist.

Ein vierter Strahlteiler (26), der ebenfalls hinter der Zerhackeinrichtung (25) im Strahlengang angeordnet ist, überlagert die beiden anderen Teilstrahlen (18) und (23) und lenkt einen kleinen Lichtanteil zum zweiten,ebenfalls als Photodiode ausgebildeten Detektor (28). Der größte Lichtanteil bildet den Meßstrahl (30), der im weiteren Verlauf über ein Strahlteilerprisma (31) und über ein Teleskop (32) zum Meßobjekt (33) ausgesandt wird. Das Strahlteilerprisma (31) lenkt das an dem Meßobjekt (33) gestreute oder reflektierte Licht zum dritten als Photodiode ausgebildeten Detektor (34) um.

Damit keine Oberflächenreflexe des Teleskops (32) zum dritten Detektor (34) gelangen, ist das Strahlteilerprisma als polarisierender Strahlteiler ausgebildet. Hinter dem Teleskop (32) ist eine λ/4-Platte (35) angeordnet. Das am Meßobjekt (33) reflektierte oder gestreute Licht passiert die λ/4-Platte (35) zweifach und ist deshalb senkrecht zu den Oberflächenreflexen des Teleskops polarisiert.

In der in Figur 1 dargestellten Situation läßt die mechanische Zerhackeinrichtung (25) Licht durch den Punkt $P_1$ transmittieren. In diesem Fall empfangen der zweite Detektor (28) und der dritte Detektor (34) Licht der Modulationsfrequenz $\Delta f_2$, während der erste Detektor (29) Licht der Modulationsfrequenz $\Delta f_1$ empfängt. Die Signale der erstgenannten Detektoren Photodioden (28, 34) sind in der Phase um einen Wert $\phi_1$ gegeneinander verschoben.

Zwei elektronische Mischer (36, 37) erzeugen aus den Signalen der drei Detektoren (28, 29, 34) zwei in der Phase um den Wert $\phi_1$ verschobene elektronische Schwingungen der Differenzfrequenz $\Delta f_{12} = \Delta f_1 - \Delta f_2$. Ein digitaler Phasenmesser (38) ermittelt den Wert $\phi_1$ der Phasenverschiebung. Zur Erzeugung der Zählimpulse des digitalen Phasenmessers (38) ist das Signal des zweiten Detektors (28) herangezogen. Eine einzelne Phasenmessung erfolgt dann mit einer digitalen Genauigkeit von $2\pi \, \Delta f_{12}/\Delta f_2$.

Während eines zweiten Meßschritts läßt die mechanische Zerhackeinrichtung (25) Licht durch den Punkt $P_2$ transmittieren. In diesem Fall empfangen der zweite Detektor (28) und der dritte Detektor (34) Licht der Modulationsfrequenz $\Delta f_1$, während der erste Detektor (29) Licht der Modulationsfrequenz $\Delta f_2$ empfangen. Die Signale der erstgenannten Detektoren (28, 34) sind nun in der Phase um einen Wert $\phi_2$ gegeneinander verschoben. Der Wert $\phi_2$ dieser Phasenverschiebung wird wie oben beschrieben ermittelt. Damit die digitale Genauigkeit konstant bleibt, ist nun zur Erzeugung der Zählimpulse des digitalen Phasenmessers (38) das Signal des ersten Detektors (29) herangezogen. Ein Schalter (39) schaltet den Trigger-Eingang des digitalen Phasenmessers mit der Frequenz der mechanischen Zerhackeinrichtung zwischen dem zweiten Detektor (28) und dem ersten Detektor (29) um.

Aus den gemessenen Phasenverschiebungen $\phi_1$ und $\phi_2$ wird der Entfernungswert s zwischen der Meßvorrichtung und dem Meßobjekt (33) berechnet. Dieser Entfernungswert ist eindeutig, solange $s \leqq c/2 \Delta f_{12}$ ist. Die digitale Genauigkeit $\Delta s$ des Entfernungsmeßwertes ergibt sich zu

$$\Delta s = \pm (c \cdot \Delta f_{12})/(2\Delta f_1 \, \Delta f_2).$$

Wie bereits weiter oben erwähnt, hängt die maximal erreichbare relative Meßgenauigkeit $\Delta s/s$ von der spektralen Unschärfe $\Delta f/f$ der Modulationsfrequenz ab. Die digitale Meßgenauigkeit $\Delta s$ und der Eindeutigkeitsbereich sind dagegen durch die numerischen Werte $\Delta f_1$ und $\Delta f_2$ der Modenabstände der beiden Laser (1, 2) bestimmt.

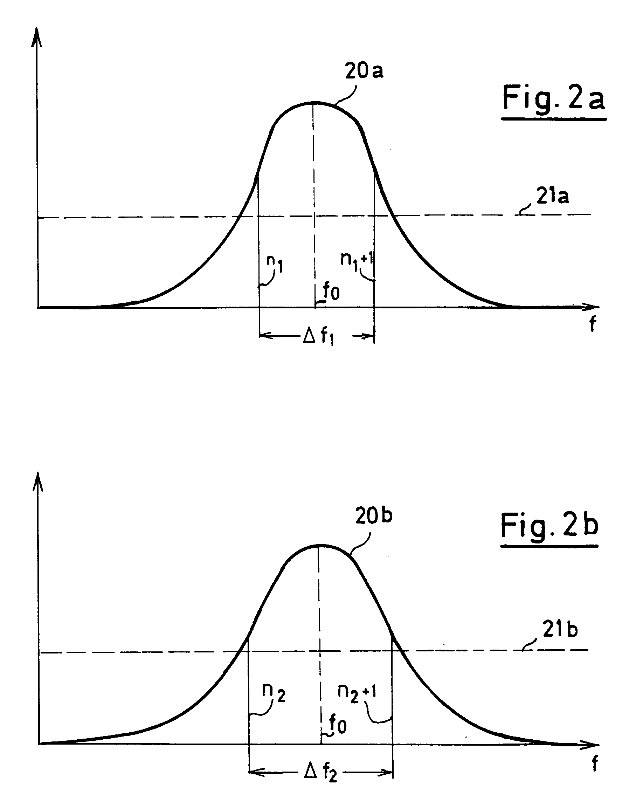

In der Figur 2a ist mit (20a) der spektrale Verlauf der Verstärkung des ersten Helium-Neon-Lasers gekennzeichnet. Die zwei benachbarten longitudinalen Modi $n_1$ und $n_1+1$ liegen oberhalb der Laserschwelle (21a) Der Frequenzabstand $\Delta f_1$ der beiden Modi ist durch die Resonatorlänge $L_1$ des ersten Lasers und die Lichtgeschwindigkeit c gegeben:

$$\Delta f_1 = c/2L_1.$$

Bei einer Resonatorlänge $L_1 = 25$ cm ergibt sich $\Delta f_1 = 600$ MHz. Es handelt sich um einen sogenannten "random"-polarisierten Laser, bei dem die benachbarten Modi $n_1$ und $n_1+1$ senkrecht zueinander linear polarisiert sind.

Das analoge gilt für den zweiten Helium-Neon-Laser, dessen spektraler Verlauf der Verstärkung mit (20b) in Figur 2b bezeichnet ist. Es handelt sich ebenfalls um einen zweimodigen, "random"-polarisierten Laser, dessen benachbarte longitudinale Modi $n_2$ und $n_2+1$ oberhalb der Laserschwelle (21b) liegen. Dieser zweite Laser hat jedoch eine um 0,21 mm geringere Resonatorlänge $L_2$ als der erste Laser. Deshalb ist auch der Frequenzabstand $\Delta f_2 = c/2L_2 = 600,5$ MHz. Der relative Unterschied der Resonatorlängen beider Laser beträgt etwa 1/1000. Ein entsprechendes Laserpaar kann z.B. aus einer Serienproduktion selektiert sein.

Mit diesen beiden Lasern ergibt sich dann eine digitale Meßgenauigkeit $\Delta s = \pm 0,2$ mm innerhalb eines Eindeutigkeitsbereiches von 300 m. Die Meßzeit einer Einzelmessung beträgt lediglich 2 µs.

Zur weiteren Reduzierung des digitalen Fehlers können die Phasenverschiebungen über mehrere Perioden der Differenzfrequenz $\Delta f_{12}$ gemessen werden. Bei einer Messung über zehn Perioden der Differenzfrequenz $\Delta f_{12}$ beträgt der digitale Fehler nur noch $2\pi/12.010$. Die Genauigkeit des Entfernungsmeßwertes beträgt dann $\Delta s = \pm 0,02$ mm bei einer Meßzeit von 20 µs.

Statistische Fehler lassen sich durch wiederholtes Messen der Werte $\phi_1$ und $\phi_2$ der Phasenverschiebung reduzieren. In diesem Fall kann in Figur 1 der digitale Phasenmesser (38) mit einer Umschaltung versehen sein, die die beiden Meßeingänge (38a, 38b) nach jedem Meßzyklus gegeneinander vertauscht. Dadurch wird der Einfluß systematischer Unterschiede zwischen den Spannungskomparatoren des digitalen Phasenmessers (38) unterdrückt.

Gemäß Figur 1 ist zur Korrektur von Phasendriften zwischen dem zweiten Detektor (28) und dem dritten Detektor (34) im Strahlengang (30) des Meßlichts vor dem Strahlteilerprisma (31) ein weiterer Strahlteiler (40) vorgesehen, der einen Teilstrahl (43) des Meßlichts (30) zum dritten Detektor (34) umlenkt. Eine zweite mechanische Zerhackeinrichtung (41) unterbricht abwechselnd diesen Teilstrahl (43) und den Strahlengang (42) des am Meßobjekt (33) gestreuten oder reflektierten Lichts. In der Zeit, in der die mechanische Zerhackeinrichtung (41) den Teilstrahl (43) des Meßlichts (30) transmittieren läßt, wird ein Phasenkorrekturwert $\phi_k$ zwischen den Signalen des zweiten Detektors (28) und des dritten Detektors (34) gemessen. Dieser Phasenkorrekturwert $\phi_k$ wird von den Phasenwerten $\phi_1$ oder $\phi_2$ abgezogen.

Soll die Entfernung zu einem streuenden Meßobjekt gemessen werden, so ist die polarisationsoptische Teilung des Meßlichts (30) und des am Meßobjekt (33) gestreuten oder reflektierten Lichts (42) nicht ideal, da eine Streuung stets depolarisierend wirkt. In diesem Fall ist eine geometrische Strahlteilung, die beispielsweise durch getrennte Sende- und Empfangsteleskope erfolgen kann, möglich.

Die mechanischen Zerhackeinrichtungen (25, 41) können durch Flüssigkristallanordnungen oder auch durch elektro- oder meganeto-optische Schaltelemente ersetzt sein. Diese sind insbesondere dann vorzuziehen, wenn es auf kurze Meßzeiten und daher auf hohe Zerhackfrequenzen ankommt.

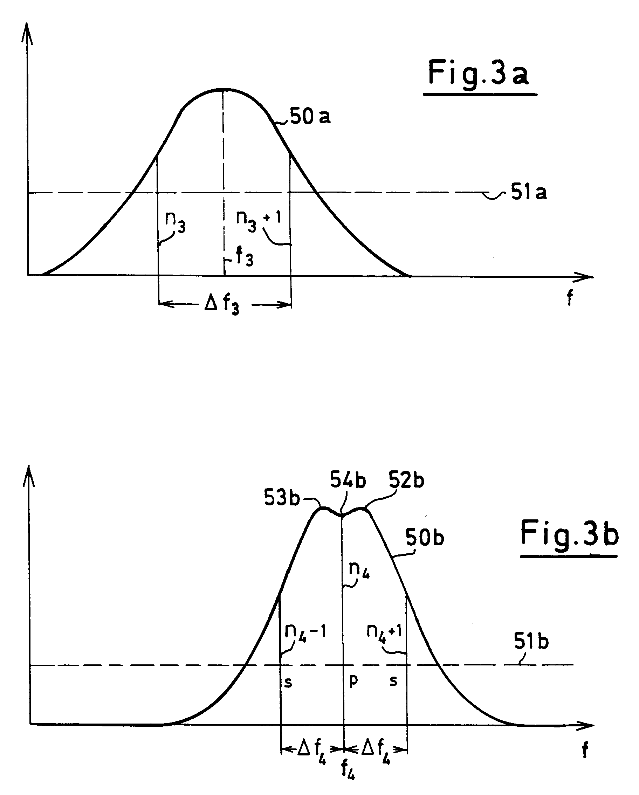

In einem zweiten Ausführungsbeispiel sind zwei unterschiedliche Laser eingesetzt. Der spektrale Verlauf des ersten Lasers ist in der Figur 3a mit (50a) gekennzeichnet. Das Maximum der Verstärkung liegt bei der Frequenz $f_3$. Es handelt sich wieder um einen Zweimoden-Laser. Die beiden Modi $n_3$ und $n_3+1$ liegen oberhalb der Laserschwelle (51a). Diese beiden Modi sind senkrecht zueinander linear polarisiert. Der Frequenzabstand zwischen den Modi ist mit $\Delta f_3$ bezeichnet. Die Frequenzstabilisierung dieses Lasers erfolgt entsprechend dem in Figur 1 beschriebenen Verfahren.

Der zweite Laser ist gemäß Figur 3b dreimodig. Die drei Modi $n_4-1$, $n_4$ und $n_4+1$ liegen oberhalb der Laserschwelle (51b). Der Modus $n_4$ ist senkrecht zu den beiden anderen Modi linear polarisiert. Der Frequenzabstand der Modi $\Delta f_4$ ist kleiner als $\Delta f_3/2$. Der spektrale Verlauf der Verstärkung (50b) hat zwischen den Maxima (52b) und (53b) ein Minimum (54b), das Lamb-Dip genannt wird. Zur Stabilisierung teilt ein Polarisationsteiler den Laserstrahl entsprechend der Polarisation auf. Die beiden Modi $n_{4-1}$ und $n_{4-1}$ bilden den amplitudenmodulierten Meßstrahl mit der Modulationsfrequenz $2\Delta f_4$. Die Intensität des Modus $n_4$ wird gemessen und zur Stabilisierung des Lasers herangezogen. Ein Regler stellt mittels Piezoelemente die Resonatorlänge so ein, daß die Frequenz des Modus $n_4$ mit der Frequenz des Lamb-Dips zusammenfällt. Die Intensität des Modus $n_4$ ist dann minimal.

Der weitere Aufbau dieses zweiten Ausführungsbeispiels entspricht dem Ausführungsbeispiel nach Figur 1.

## Patentansprüche

1. Optische Entfernungsmeßvorrichtung mit einer Lichtquelle zum Aussenden eines Lichtstrahles zum Meßobjekt und mit einer Einrichtung zur Bestimmung der Phasenverschiebung zwischen dem am Meßobjekt reflektierten bzw. zurückgestreuten Licht und dem ausgesandten Licht, wobei die Lichtquelle zwei jeweils frequenzstabilisierte, mehrmodige Laser (1, 2) mit Frequenzabständen $\Delta f_1$ und $\Delta f_2$ zwischen den Modi umfaßt, wobei sich das Verhältnis $\Delta f_1/\Delta f_2$ der Frequenzabstände um einen gegen die Zahl eins kleinen Betrag von einer ganzen Zahl unterscheidet, wobei mehrere Modi jedes Lasers zur Erzeugung zweier amplitudenmodulierter Strahlen (15, 16) interferenzfähig überlagert sind und wobei Detektoren (28, 29) zur Detektion von Teilstrahlen beider amplitudenmodulierter Strahlen (15, 16) und ein Detektor (34) zur Detektion des am Meßobjekt (33) gestreut oder reflektierten Lichts vorgesehen sind, dadurch gekennzeichnet, daß die Einrichtung zur Bestimmung der Phasenverschiebung (36, 37, 38) das Ausgangssignal des Detektors (34), der Licht des am Meßobjekt (33) gestreut oder reflektierten Lichts empfängt, mit dem Ausgangssignal des Detektors (29) elektronisch mischt, der Licht des jeweils anderen amplitudenmodulierten Strahls (15, 16) empfängt.

2. Optische Entfernungsmeßvorrichtung nach Anspruch 1, dadurch gekennzeichnet, daß die beiden Laser (1, 2) jeweils zweimodig sind.

3. Optische Entfernungsmeßvorrichtung nach Anspruch 2, dadurch gekennzeichnet, daß sich das Verhältnis $\Delta f_1/\Delta f_2$ der Frequenzabstände der beiden Laser um weniger als 1% von der Zahl eins unterscheidet.

4. Optische Entfernungsmeßvorrichtung nach einem der Ansprüche 1-3, gekennzeichnet durch eine Einrichtung (25) zum Vertauschen der beiden Laserstrahlen, so daß abwechselnd die amplitudenmodulierten Strahlen (15, 16) des ersten Lasers (1) und des zweiten Lasers (2) zum Meßobjekt (33) ausgesendet werden.

5. Optische Entfernungsmeßvorrichtung nach Anspruch 4, dadurch gekennzeichnet, daß als Einrichtung zum gegenseitigen Vertauschen beider Laserstrahlen eine mechanische Zerhackeinrichtung (25) vorgesehen ist, die abwechselnd Licht an zwei verschiedenen Stellen (P1, P2) transmittieren läßt.

6. Optische Entfernungsmeßvorrichtung nach Anspruch 4 oder 5, dadurch gekennzeichnet, daß zur Kompensation der Phasendriften zwischen den beiden Licht desselben Lasers empfangenden Detektoren (28, 34) eine zweite mechanische Zerhackeinrichtung (41) vorgesehen ist, die abwechselnd das am Meßobjekt (33) gestreute oder reflektierte Licht (42) und einen Teil des auszusendenden Lichts (43) zum dritten Detektor (34) transmittieren läßt.

7. Optische Entfernungsmeßvorrichtung nach einem der Ansprüche 1-6, dadurch gekennzeichnet, daß zur Bestimmung der Phasenverschiebung zwischen dem am Meßobjekt (33) gestreuten oder reflektierten Licht (42) und dem ausgesandten Licht (30) ein digitaler Phasenmesser (38) vorgesehen ist, dessen Zählfrequenz durch die Frequenzabstände zweier Modi eines der beiden Laser (1, 2) gegeben ist.

## Claims

1. Optical distance-measuring apparatus comprising a light source for emitting a light beam to a measurement object and comprising an arrangement to determine the phase shift between light reflected specularly or diffusely by the measurement object and the emitted light, wherein the light source consists of two frequency-stabilized, multimode lasers (1, 2) with frequency spacings $\Delta f_1$ and $\Delta f_2$ between the modes, wherein the ratio $\Delta f_1/\Delta f_2$ of both frequency spacings differs from an integer number by an amount which is small compared to the number one, wherein several modes of each laser are superimposed in an interfering manner for generating two amplitude-modulated beams (15, 16) and wherein detectors (28, 29) for detecting partial beams of both amplitude-modulated beams (15, 16) and a further detector (34) for detecting light reflected specularly or diffusely at the measurement object (33) are provided, characterized in that the arrangement to determine the phase shift (36, 37, 38) electronically mixes the output signal of the detector (34) detecting light reflected specularly or diffusely at the measurement object (33) and the output signal of the detector (29) detecting light of the respective different amplitude-modulated beam (15, 16).

2. Optical distance-measuring apparatus of claim 1, characterized in that each of the two lasers (1, 2) has two modes.

3. Optical distance-measuring apparatus of claim 2, characterized in that the ratio $\Delta f_1/\Delta f_2$ of the frequency spacings of the two lasers differs from the number one by less than 1 %.

4. Optical distance-measuring apparatus of one of the claims 1-3, characterized in that an arrangement (25) for interchanging the two laser beams is provided in a manner that the amplitude-modulated beams (15, 16) of the first laser (1) and of the second laser (2) are emitted alternately to the measurement object (33).

5. Optical distance-measuring apparatus of claim 4, characterized in that the arrangement for the mutual interchange of both laser beams is a mechanical chopper (25) which allows light to transmit alternately at two different points ($P_1$, $P_2$).

6. Optical distance-measuring apparatus of claim 4 or 5, characterized in that for the compensation of phase drifts between the two detectors (28, 34) receiving light of the same laser, a second mechanical chopper (41) is provided which allows the transmission of light to the third detector (34) alternately of light (42) reflected diffusely or specularly at the measurement object (33) and a part of the light (43) to be emitted.

7. Optical distance-measuring apparatus of one of the claims 1 to 6, characterized in that for determining the phase shift between the light (42) reflected diffusely or specularly at the measurement object (33) and the emitted light (30), a digital phasemeter (38) is provided, the clocking frequency of which is given by the frequency spacing of two modes of one of the two lasers (1, 2).

## Revendications

1. Equipement de mesure optique a distance avec une source lumineuse émettant un faisceau lumineux en direction de l'objet à mesurer et avec un dispositif déterminant le déphasage entre la lumière réfléchie ou diffusée par l'objet à mesurer et la lumière émise, sachant que la source lumineuse se compose de deux lasers multimode à fréquences stabilisées (1, 2) avec des intervalles de fréquence entre modes $\Delta f_1$ et $\Delta f_2$, sachant que le quotient $\Delta f_1/\Delta f_2$ est très proche d'un nombre entier, sachant qu'il y a une superposition interférentielle de plusieurs modes au niveau de chaque laser pour la production de deux rayonnements modulés en amplitude (15, 16) et sachant que l'équipement comprend deux détecteurs (28, 29) pour capter les deux rayonnements lumineux modulés en amplitude (15, 16) et un détecteur (34) pour capter la lumière réfléchie ou diffusée par l'objet à mesurer (33).
L'équipement est caractérisé par le fait que le dispositif servant à mesurer le déphasage (36, 37,38) combine électroniquement le signal de sortie du détecteur (34) qui reçoit la lumière réfléchie par l'objet à mesurer, avec le signal de sortie du détecteur (29) qui reçoit respectivement un des rayonnements modulés en amplitude (15, 16).

2. Equipement de mesure optique à distance conforme à la revendication 1 caractérisé par le fait que les deux lasers (1, 2) sont bimode.

3. Equipement de mesure optique à distance conforme à la revendication 2 caractérisé par le fait que le rapport $\Delta f_1/\Delta f_2$ des intervalles de fréquence des deux lasers diffère de moins d'1% du nombre 1.

4. Equipement de mesure optique à distance conforme aux revendications 1 - 3, caractérisé par un dispositif (25) permettant d'inverser les deux faisceaux lasers pour émettre alternativement en direction de l'objet à mesurer les rayons modulés en amplitude (15, 16) du premier laser (1) et du second laser (2).

5. Equipement de mesure optique à distance conforme à la revendication 4, caractérisé par le fait que le dispositif permettant de faire l'inversion entre les deux faisceaux lasers consiste en un hacheur mécanique (25) qui laisse passer la lumière alternativement en deux endroits différents (P1, P2).

6. Equipement de mesure optique à distance conforme à la revendication 4 ou 5, caractérisé par le fait que pour compenser la dérive des phases entre les deux détecteurs (28, 34) qui captent la lumière du même laser, on a prévu un second hacheur mécanique (41) qui transmet alternativement sur le troisième détecteur (34) la lumière diffusée ou réfléchie (42) par l'objet à mesurer (33) et une partie de la lumière transmise (43).

7. Equipement de mesure optique à distance conforme à la revendication 1 - 6, caractérisé par le fait qu'un phasemètre numérique (38) est prévu pour déterminer le déphasage entre la lumière diffusée ou réfléchie par l'objet à mesurer (33) et la lumière émise (30) et que la fréquence de comptage de ce phasemètre est donnée par les intervalles de fréquence entre deux modes de l'un des deux lasers (1, 2).

Fig.1

Fig. 2a

Fig. 2b

Fig.3a

Fig.3b